(19) Europäisches Patentamt / European Patent Office / Office européen des brevets

(11) **EP 1 854 772 B1**

(12) **EUROPÄISCHE PATENTSCHRIFT**

(45) Veröffentlichungstag und Bekanntmachung des Hinweises auf die Patenterteilung:
**27.03.2013 Patentblatt 2013/13**

(21) Anmeldenummer: **07106006.5**

(22) Anmeldetag: **12.04.2007**

(51) Int Cl.:
*C04B 35/111* (2006.01)   *C04B 35/46* (2006.01)
*C04B 35/468* (2006.01)   *C04B 35/486* (2006.01)
*C04B 35/495* (2006.01)   *C04B 35/581* (2006.01)
*C04B 35/634* (2006.01)   *C04B 35/626* (2006.01)

(54) **Verfahren zur Herstellung von keramischen Grünfolien mit acetalisierten Polyvinylalkoholen**

Method of manufacturing of ceramic green sheets with acetalised Polyvinylalcohol

Procédé de préparation des feuilles en matière céramique crue avec de l'alcool polyvinylique acétalisé

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.05.2006 EP 06113753**

(43) Veröffentlichungstag der Anmeldung:
**14.11.2007 Patentblatt 2007/46**

(73) Patentinhaber: **Kuraray Europe GmbH**
**65795 Hattersheim (DE)**

(72) Erfinder:
• **Frank, Michael**
**55129, Mainz (DE)**
• **Fuss, Robert**
**65825, Liederbach (DE)**

(74) Vertreter: **Kisters, Michael Marcus et al**
**Kuraray Europe GmbH**
**Patents and Trademarks**
**Mülheimer Strasse 26**
**53840 Troisdorf (DE)**

(56) Entgegenhaltungen:
**DE-A1- 4 003 198   DE-A1- 19 816 722**
**US-B1- 6 211 289**

• **WADE, B.: "Vinyl Acetal Polymers", ENCYCLOPEDIA OF POLYMER SCIENCE AND TECHNOLOGY, vol. 8, 15 April 2003 (2003-04-15), pages 381-399, John Wiley & Sons, Inc. DOI: 10.1002/0471440264.pst473**

## Beschreibung

Die vorliegende Erfindung betrifft die Verwendung von acetalisierten Polyvinylalkoholen zur Herstellung von keramischen Grünfolien bzw. ein Verfahren zur Herstellung dieser keramischen Grünfolien.

## Technisches Gebiet

Keramische Materialien für die Elektronikindustrie werden häufig durch Sintern einer sog. Grünfolie, d.h. einem folienartigen, dünnen Formkörper, der die keramischen Materialien enthält, produziert. Zur Herstellung dieser Grünfolien wird zunächst eine Suspension aus Metalloxiden und organischen Lösungsmitteln unter zur Hilfenahme von Weichmachern und Dispergierhilfen hergestellt. Diese Suspension wird anschließend mit einem geeigneten Verfahren (z.B. doctor blade process) in der gewünschten Dicke auf eine Trägerfolie aufgetragen und das Lösungsmittel entfernt. Die so erhaltene Grünfolie muss rissfrei sein, eine glatte Oberfläche aufweisen und noch eine gewisse Elastizität besitzen.

## Stand der Technik

Als Bindemittel bzw. Dispergiermittel zur Herstellung von keramischen Grünfolien werden häufig Fischöle, Polyacrylate oder bestimmte Polyvinylacetale wie Polyvinylbutyral verwendet. So beschreibt DE 4 003 198 A1 die Herstellung einer Gießmasse für keramische Grünfolien, wobei als Bindemittel Polyvinylbutyral mit einem Rest-Polyvinylacetatgehalt von 0 bis 2 Gew.% eingesetzt wird. Analog offenbart DE 3 724 108 A1 die Verwendung von Polyvinylbutyral, wobei der Rest-Polyvinylacetatgehalt bei 0,5 bis 3,0 Gew.% liegt.

Die hier beschriebenen Polyvinylbutyrale weisen allerdings eine geringe Dispergierfähigkeit auf und dienen als temporäres Bindemittel zur Gewährleistung der Flexibilität der gewünschten Grünfolie. So erhaltene Suspensionen weisen nur einen relativ geringen Feststoffanteil auf.

Aus einem anderen technischen Gebiet, der Herstellung von Druckfarben und Lacken ist die Verwendung von Polyvinylbutyral mit höherem Restacetatgehalt bekannt (DE 198 16 722 A1). Weiterhin offenbart DE1545135 A1 die Verwendung von Polyvinylbutyral mit einem Restacetatgehalt von 8 % zur Herstellung von Dispersionen.

Die genannten Schriften beziehen sich auf die Dispergierung von organischen Pigmenten bzw. auf Dispersionen als solche und nicht auf die Herstellung von Suspensionen keramischer Pulver oder keramischer Grünfolien.

In US 6211289 ist die Verwendung eines acetalisierten Copolymerisats von Vinylalkohol und 1-Alkylvinylalkoholen in Suspensionen zur Herstellung von Grünfolien beschrieben. Diese Verbindungen weisen vermutlich zur Einstellung einer geeigneten Viskosität der Suspension einen Restacetatgehalt von < 5 Gew.% auf. Zudem ist die Herstellung des Copolymerisats aus Vinylalkohol und 1-Alkylvinylalkoholen aufwändig

## Aufgabe

Aufgabe der vorliegenden Erfindung war es daher, Binde- oder Dispergiermittel zur Herstellung von Suspensionen für keramische Grünfolien bereit zustellen, die eine hohe Dispergierwirkung aufweisen und einen hohen Feststoffgehalt bei gleichzeitig niedriger Viskosität der Suspension gewährleisten.

Überraschenderweise wurde gefunden, dass Polyvinylacetale mit einem hohen Rest-Polyvinylacetatgehalt hervorragend als Binde- oder Dispergiermittel zur Herstellung von keramischen Suspensionen und damit zur Produktion von keramischen Grünfolien geeignet sind.

## Gegenstand der Erfindung

Gegenstand der vorliegenden Erfindung ist daher die Verwendung acetalisierter Polyvinylalkohole zur Herstellung von keramischen Grünfolien oder keramischen Formkörpern, wobei der acetalisierte Polyvinylalkohol einen Polyvinylacetatgehalt von 8 bis 50 Gew.% und einen Polymerisationsgrad $\overline{P}_W$ von 100 bis 1200 aufweist.

Die erfindungsgemäß verwendeten acetalisierten Polyvinylalkohole sind ausschließlich aus Vinylalkoholeinheiten ohne 1-Alkyvinylalkoholeinheiten aufgebaut. Sie weisen bevorzugt einen Polyvinylacetatgehalt von 10 bis 50 Gew.%, besonders bevorzugt 10 bis 30 Gew.%, insbesondere 10 bis 20 Gew.% oder 14 bis 18 Gew.% auf.

Weiterhin können die acetalisierten Polyvinylalkohole einen Polyvinylalkoholgehalt von 10 bis 35 Gew.%, bevorzugt 11 bis 27 Gew.% und insbesondere 16 bis 21 Gew.% aufweisen.

Der Polymerisationsgrad $\overline{P}_W$ der acetalisierten Polyvinylalkohole liegt bevorzugt zwischen 100 bis 1000, besonders bevorzugt zwischen 100 bis 800 und insbesondere zwischen 100 bis 500.

Bevorzugt weisen die verwendeten acetalisierten Polyvinylalkohole eine nach DIN 53015 (10 % Lösung in Ethanol bei 20 °C im Hoeppler-Viskosimeter) bestimmte Viskosität von 2 bis 500 mPas, besonders bevorzugt von 2 bis 200 mPas, insbesondere 2 bis 125 mPas oder 2 bis 75 mPas, auf.

Die erfindungsgemäß verwendeten, acetalisierten Polyvinylalkohole können vollständig oder teilweise acetalisiert eingesetzt werden, wobei der Einsatz von teilacetalisierten Polyvinylalkoholen mit einem Acetalisierungsgrad von 15 bis 80 Gew. %, insbesondere 20 bis 60 Gew. % bevorzugt ist. Der Acetalisierungsgrad der erfindungsgemäß verwendeten acetalisierten Polyvinylalkohole bestimmt sich aus der Differenz von 100 % zu Polyvinylacetatgehalt plus Polyvinylalkoholgehalt (jeweils in Gew.%)

Zur Acetalisierung der Polyvinylalkohole können ein oder mehrere Aldehyde der Gruppe Formaldehyd, Acetaldehyd, Propanal, Butanal, Isobutanal, Pentanal, Hexanal, Heptanal, Octanal, Nonanal, Isononanal oder Decanal eingesetzt werden. Bevorzugt wird Butanal zur Acetalisierung eingesetzt, so dass wiederum bevorzugt zur Herstellung der Grünfolie Polyvinylbutyral verwendet wird.

Die Herstellung des acetalisierten Polyvinylalkohols ist dem Fachmann im Prinzip bekannt und wird durch säurekatalysierte Acetalisierung eines entsprechenden Polyvinylalkohols durchgeführt. Insbesondere geeignet sind die in DE 19 816 722 A1 offenbarten Polyvinylbutyrale bzw. deren Herstellverfahren. Zur Herstellung der erfindungsgemäß verwendbaren Polyvinylacetale bzw. Polyvinylbutyrale wird ausdrücklich auf diese Druckschrift verwiesen.

Weiterhin ist Gegenstand der Erfindung ein Verfahren zur Herstellung von keramischen Grünfolien oder keramischen Formkörpern durch Vergießen und Trocknen einer Suspension enthaltend anorganische Pigmente, organische Lösungsmittel, Bindemittel, Weichmacher und Dispergiermittel, wobei als Dispergiermittel ein acetalisierter Polyvinylalkohol mit einem Polyvinylacetatgehalt von 8 bis 50 Gew.% bzw. den anderen genannten Polyvinylacetatgehalten und einen Polymerisationsgrad $\bar{P}_w$ von 100 bis 1200 verwendet wird.

Bevorzugt enthalten die erfindungsgemäß hergestellten Suspensionen 0,1 bis 10 Gew.%, bevorzugt 1 bis 8 Gew.%, besonders bevorzugt 2 bis 6 Gew.%, insbesondere 0,1 bis 2 Gew.% des genannten, acetalisierten Polyvinylalkohols.

Zur Herstellung von keramischen Grünkörpern wird auf die genannten Druckschriften verwiesen. In der Regel werden zunächst ein oder mehrere anorganische Pigmente, wie z.B. $Al_2O_3$, $BaTiO_3$, W-Oxide, $ZrO_2$, $TiO_2$ oder Aluminiumnitrit mit einem organischen Lösungsmittel wie z.B. Methanol, Toluol, MEK, Paraffine oder Isopropanol oder Mischungen aus diesen aufgeschlämmt. In diese Suspension wird nun ein Dispergator wie Fischöl und/oder die genannten acetalisierten Polyvinylalkohole zugegeben. Anschließend wird die Suspension mit einem oder mehreren Weichmachern versetzt und über mehrere Stunden homogenisiert.

Als Weichmacher werden bevorzugt Phthalate wie Dioctylphthalat, Dibutylphthalat oder Benzylbutylphthalat, Adipate, Polyethylenglykole, Phosphorsäureester, Zitronensäureester oder veresterte Polyethylenglykole wie 3G7 oder 3G8 eingesetzt.

Das erfindungsgemäße Verfahren kann zur Herstellung der Suspensionen somit die folgenden Schritte umfassen:

- Aufschlämmen eines anorganischen Materials (Pigments) in einem organischen Lösungsmittel
- Zugabe eines Dispergiermittels
- Optional: Aufschäumen des anorganischen Materials in einem Gemisch aus Lösungsmittel und Dispergiermittel
- Homogenisieren der Suspension
- Zugabe eines Weichmachers
- Zugabe eines Bindemittels, optional identisch mit dem Dispergiermittel
- Homogenisierung der Suspension

Die erfindungsgemäße Verwendung bzw. das erfindungsgemäße Verfahren erlauben den weitgehenden oder vollständigen Ersatz der üblicherweise als Dispergator verwendeten Materialien durch die genannten acetalisierten Polyvinylalkohole. Bevorzugt wird ein Dispergatorgemisch verwendet, das zu mindestens 50 Gew.%, insbesondere zu 75 % und ganz besonders zu 100 % aus dem genannten acetalisierten Polyvinylalkohol besteht.

Die in die Suspension eingearbeiteten polymeren Bindemittel bestehen z.B. aus Standard-Polyvinylbutyralen, Polyacrylaten und/oder den genannten acetalisierten Polyvinylalkoholen, jeweils alleine oder im Gemisch. Als Standard-Polyvinylbutyral sind z.B. die Typen Mowital B20H, B45H, B45M, B60, B60H oder B75 der Kuraray Europe GmbH geeignet. Der Polyvinylacetatgehalt dieser Standard-Polyvinylbutyrale liegt bei 1 bis 4 Gew.%.

Es ist insbesondere möglich, ein Gemisch aus einem oder mehreren Standard-Polyvinylbutyralen und einem oder mehreren der genannten acetalisierten Polyvinylalkohole einzusetzen, wobei der Anteil der Standard-Polyvinylbutyrale unter 50 Gew.% (d.h. zwischen 0 und unter 50 Gew.%), bevorzugt unter 25 Gew.% (d.h. zwischen 0 und unter 25 Gew.%)und insbesondere zwischen 0 und 10 Gew.% liegt.

In einer Variante der vorliegenden Erfindung werden als Bindemittel nur die genannten acetalisierten Polyvinylalkohole und keine weiteren polymeren Bindemittel eingesetzt.

In einer weiteren Variante der vorliegenden Erfindung werden als Dispergator und als Bindemittel nur die genannten acetalisierten Polyvinylalkohole und keine weiteren polymeren Bindemittel oder Dispergatoren eingesetzt.

Die so erhaltene Suspension wird in geeigneten Mischern, wie z.B. Kugelmühlen, homogenisiert. Suspensionen, die unter Verwendung der acetalisierten Polyvinylalkohole hergestellt wurden, zeichnen sich durch eine besonders niedrige Viskosität bei ebenfalls niedrigen Dispergatorkonzentrationen aus. Dementsprechend können die Suspensionen hohe Feststoffanteile bei geringer Viskosität aufweisen, was die Verarbeitung der Suspension für keramische Grünfolien in kontinuierlichen Anlagen sehr erleichtert.

**Beispiele**

Bestimmungsmethoden

a) <u>Bestimmung des Polyvinylacetatgehalts</u>

Unter dem Polyvinylacetatgehalt wird der gewichtsprozentige Anteil an Acetylgruppen verstanden, der sich aus dem Verbrauch der für die Verseifung von 1 g Substanz notwendigen Menge Kalilauge ergibt. Bestimmungsmethode (in Anlehnung an EN ISO 3681):

Etwa 2 g der zu untersuchenden Substanz werden in einem 500 ml Rundkolben auf 1 mg genau eingewogen und mit 90 ml Ethanol und 10 ml Benzylalkohol am Rückfluß gelöst. Nach dem Abkühlen wird die Lösung mit 0,01 n NaOH gegen Phenolphthalein neutral gestellt. Anschließend werden 25,0 ml 0,1 n KOH zugegeben und 1,5 Stunden am Rückfluß erhitzt. Man läßt den Kolben verschlossen abkühlen und titriert den Laugenüberschuß mit 0,1 n Salzsäure gegen Phenolphthalein als Indikator bis zur bleibenden Entfärbung zurück. In gleicher Weise wird eine Blindprobe behandelt. Der PV-Acetatgehalt berechnet sich wie folgt: PV-Acetatgehalt [%] = (b-a)*86/E, mit a = Verbrauch an 0,1 n KOH für Probe in ml, b = Verbrauch an 0,1 n KOH für Blindversuch in ml und E = Einwaage der zu untersuchenden Substanz trocken in g.

b) <u>Bestimmung des Polyvinylalkoholgruppengehalts</u>

Der Polyvinylalkoholgruppengehalt (Polyvinylalkoholgehalt) ist der Anteil an Hydroxylgruppen, der durch die nachträgliche Acetylierung mit Essigsäureanhydrid nachweisbar ist.

Bestimmungsmethode (in Anlehnung an DIN 53240):

Etwa 1 g Mowital wird in einem 300 ml Schliff-Erlenmeyerkolben auf 1 mg genau eingewogen, 10,0 ml Essigsäureanhydrid-Pyridin-Gemisch (23:77 V/V) zugefügt und 15-20 Stunden auf 50°C erwärmt. Nach dem Abkühlen kommen 17 ml 1,2-Dichlorethan hinzu und es wird kurzzeitig umgeschwenkt. Anschließend gibt man unter Rühren 8 ml Wasser zu, verschließt den Kolben mit einem Stopfen und rührt 10 Minuten. Kolbenhals und Stopfen werden mit 50 ml E-Wasser abgespült, mit 5 ml n-Butanol überschichtet und die freie Essigsäure mit 1 n Natronlauge gegen Phenolphthalein titriert. In gleicher Weise wird eine Blindprobe behandelt. Der Polyvinylalkoholgehalt berechnet sich wie folgt: Polyvinylalkoholgehalt [%] = (b-a)*440/E, mit a = Verbrauch an 1 n NaOH für Probe in ml, b = Verbrauch an 1 n NaOH für Blindprobe in ml, und E = Einwaage der zu untersuchenden Substanz trocken in g.

c) <u>Bestimmung der Viskosität</u>

Die Viskosität der verwendeten Polyvinylacetale wird gemäß DIN 53015 an einer 10 %igen Lösung in Ethanol bei 20 °C im Hoeppler-Viskosimeter bestimmt.

d) <u>Bestimmung des Polymerisationsgrades</u>

Der Polymerisationsgrad $\overline{P}_w$ kann an Polyvinylalkoholen einfacher bestimmen werden und ändert sich während der Acetalisierung nicht. Am Beispiel von Polyvinylbutyral wird der Polymerisationsgrad $\overline{P}_w$ nach folgender Formel berechnet:

$$\overline{P}_w = \frac{\overline{M}_w}{(86 - 0,42 \cdot DH)}$$

$\overline{M}_w$ wird mittels Gel-Permeationschromatographie (GPC) an reacetylierten Proben durchgeführt, kombiniert mit statischer Lichtstreuung (Absolutmethode). Die Genauigkeit der Werte für $\overline{M}_w$ wurde mit $\pm 15\%$ ermittelt.

Der Hydrolysegrad (DH [mol%]) wird nach folgender Formel berechnet:

$$DH = \frac{100 - 0{,}1535 \cdot EV}{100 - 0{,}0749 \cdot EV} \cdot 100$$

Die Esterzahl (EV) wird hierfür wie folgt und unter Zuhilfenahme folgender Formel bestimmt:

$$EV = \frac{(a - b) \cdot 5{,}61}{E}$$

Mit a = Verbrauch an 0.1N KOH [mL], b = Verbrauch an 0.1N KOH [mL] für die Blindprobe, E = exakte Einwaage an Polyvinylalkohol

Ungefähr 1 g des Polyvinylalkohols wird in einen 250 mL Rundkolben gegeben und mit 70 mL destilliertem Wasser und 30 mL neutralisiertem Alkohol versetzt und dann unter Rückfluss solange erhitzt, bis der Polyvinylalkohol völlig gelöst ist. Nach dem Abkühlen wird mit 0.1N KOH gegen Phenolphthalein bis zum Neutralpunkt titriert. Wenn die Neutralisation beendet ist, werden 50 mL 0.1N KOH zugegeben und diese Mischung für eine Stunde unter Rückfluss erhitzt. Der Überschuss der Lauge wird mit 0.1N HCl in der Hitze gegen Phenolphthalein als Indikator solange zurück titriert, bis die Farbe der Lösung nicht mehr zurückkehrt. Gleichzeitig wird der Test mit einer Blindprobe durchgeführt.

Vergleichsbeispiele (Bindemittel nach dem Stand der Technik, alle Kuraray Europe GmbH)

1) Mowital B45H mit einem Polymerisationsgrad von ca. 600
2) Mowital B60H mit einem Polymerisationsgrad von ca.800
3) Mowital B20H mit einem Polymerisationsgrad von ca. 400

Beispiel 1

Eingesetztes Bindmittel:

Polyvinylbutyral gemäß DE 19 816 722 A1 mit einem Polymerisationsgrad von ca. 800, mit einem Polyvinylalkoholgehalt von 20,2 Gew.%, einem Polyvinylacetatgehalt von 16,1 % und einer im Hoeppler-Viskosimeter bestimmten Viskosität einer 10 %igen Lösung in Ethanol bei 20 °C gemäß DIN 53015 von 122,5 mPas.

Beispiel 2

Eingesetztes Bindmittel:

Polyvinylbutyral gemäß DE 19 816 722 A1 mit einem Polymerisationsgrad von ca. 1100, mit einem Polyvinylalkoholgehalt von 20,7 Gew.%, einem Polyvinylacetatgehalt von 16,2 % und einer im Hoeppler-Viskosimeter bestimmten Viskosität einer 10 %igen Lösung in Ethanol bei 20 °C gemäß DIN 53015 von 275 mPas.

Beispiel 3

Eingesetztes Bindmittel:

Polyvinylbutyral gemäß DE 19 816 722 A1 mit einem Polymerisationsgrad von ca. 350, mit einem Polyvinylalkoholgehalt von 19,6 Gew.%, einem Polyvinylacetatgehalt von 19,4 % und einer im Hoeppler-Viskosimeter bestimmten Viskosität einer 10 %igen Lösung in Ethanol bei 20 °C gemäß DIN 53015 von 20,8 mPas.

Weitere verwendete Materialien

| Komponente | Beschreibung |
|---|---|
| Lösemittel | Azetropes Toluol-Ethanol-Gemisch |
| Dispergator | Menhaden Fishoil, Fa. Reichhold Inc., USA |

(fortgesetzt)

| Komponente | Beschreibung |
|---|---|
| Keramischer Füller | Tonerde A16-SG, Fa. Alcoa, USA<br>Korngröße $d_{50}$: 0,35 $\mu$m<br>Spezifische Oberfläche (BET): 6,6 6 m$^2$/g |
| Plastifizierer | Alkyl (C7-C9) Benzyl Phthalat, Fa. Ferro |

**Bewertung der Suspensionseigenschaften**

a) Rheologisches Verhalten von Binderlösungen

Messverfahren: Für die Bestimmung der rheologischen Eigenschaften wurden von den jeweiligen PVB's 10 Masse%ige Lösungen im Lösemittelgemisch Ethanol/Toluol hergestellt und für 24h im Taumelmischer homogenisiert.

Die rheologische Charakterisierung erfolgte nach dem Kegel-Platte-Messprinzip (Kegeldurchmesser 50 mm, Öffnungswinkel 2°) mit dem Rotationsrheometer UDS 200 der Fa. Anton Paar (Österreich). Die Regelung des rotierenden Kegels erfolgt schubspannungsgesteuert, die Messtemperatur lag bei 20 °C. Die Viskosität wurde gegen die Schubspannung aufgetragen.

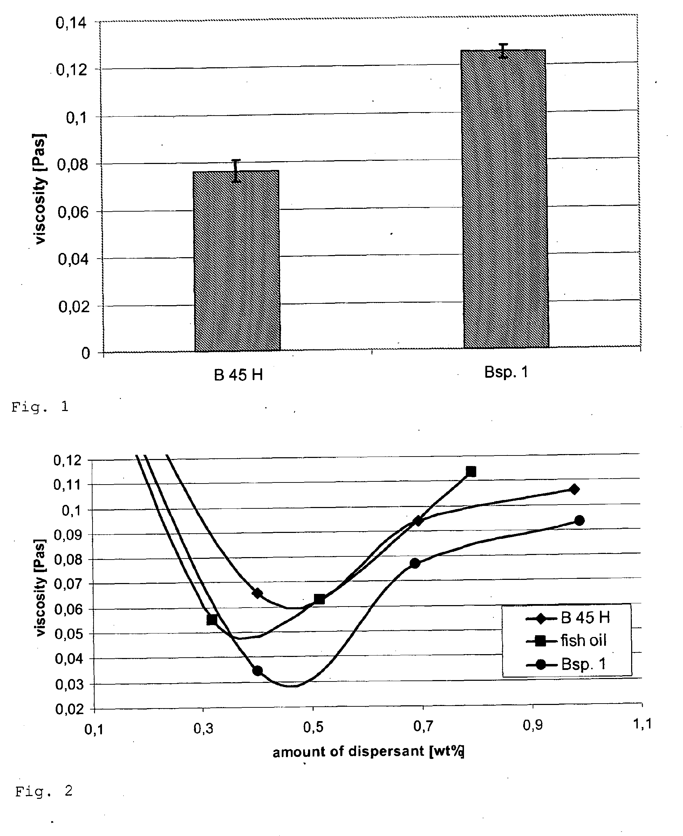

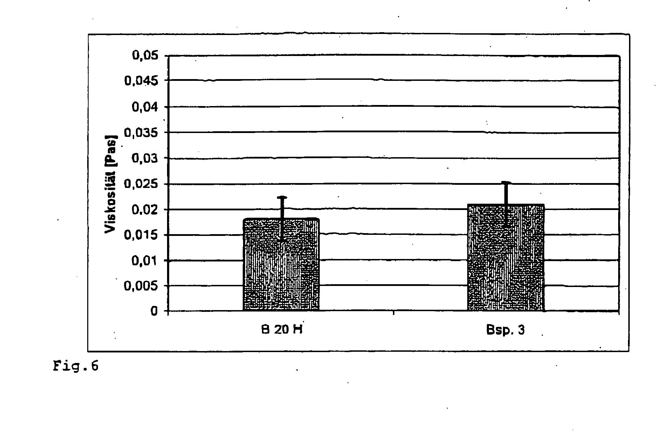

Ergebnisse und Bewertung: Fig. 1, 4 und 6 zeigen die mittlere Viskosität der jeweiligen Binderlösungen bei einer Schubspannung von 20 Pa*s, wobei die Binderlösungen über den gesamten Messbereich eine konstante Viskosität aufwiesen (Newton sches Verhalten). Die folgende Tabelle zeigt die Messdaten zu den o.g. Figuren.

| | VB 1 B45H | Bsp.1 | VB 2 B60H | Bsp.2 | VB 3 B20H | Bsp.3 |
|---|---|---|---|---|---|---|
| Viskosität [mPa*s] | 70-80 | 125 | 227 | 274 | 18 | 21 |

Die Lösungen mit den erfindungsgemäßen PVB mit hohen Polyvinylacetatgehalten gemäß Beispiel 1, 2 und 3 zeigen eine höhere Lösungsviskosität als die der Vergleichssubstanzen B20H, B45H und B60H.

b) Rheologie von PVB-Al$_2$O$_3$-Suspensionen

Messverfahren: Um die dispergierende Wirkung der PVB-Binder zu beurteilen, wurden verschiedene Al$_2$O$_3$-Suspensionen (40 Gew.% Ethanol/Toluol, 60 Gew.% Al$_2$O$_3$) aufbereitet. In diese wurden schrittweise der jeweilige PVB-Binder bzw. Dispergator zugegeben und mehrere Stunden homogenisiert. Bei der Herstellung der Folien wurde zunächst der Dispergator (in diesem Fall das PVB) im Lösungsmittel vorgelöst und dann das Pulver hinzugegeben. Die jeweilige Suspension wurde mittels Rotationsviskosimeter charakterisiert. Dabei wurde die Suspensionsviskosität bei einer Scherrate von 100 1/s als Vergleichswert herangezogen.

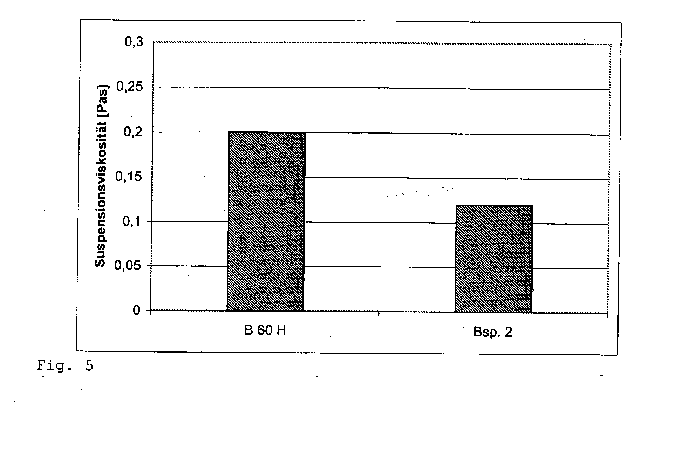

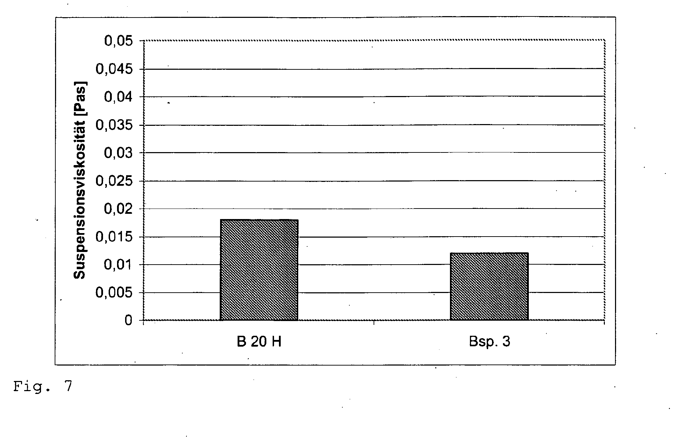

Ergebnisse und Bewertung: Fig. 2,3, 5 und 7 zeigen die Viskositäten von verschiedenen Suspensionen in Abhängigkeit vom Feststoffgehalt der Suspension. Die verwendeten PVB-Binder besitzen im Vergleich zu dem häufig als Dispergator verwendeten Fischöl eine verringerte Viskosität. Weiterhin findet man gegenüber den Vergleichssubstanzen Mowital B20H, B45H und B60H eine bessere dispergierende Wirkung, da die Viskositätswerte von entsprechend angesetzten Suspensionen unter denen der mit den Mowital-Typen angesetzten Suspensionen liegen.

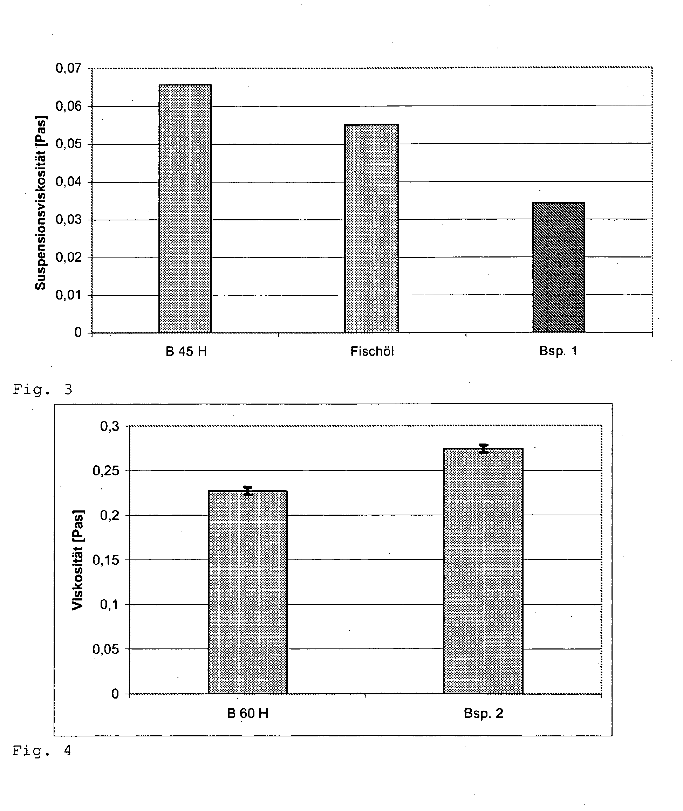

Einen Vergleich der dispergierenden Eigenschaften der untersuchten Dispergatoren zeigen die Fig. 3, 5 und 7. Je besser die Dispergierwirkung, desto niedriger ist die Viskosität der betreffenden Al$_2$O$_3$-Suspension. Eine deutlich dünnflüssigere und somit besser dispergierte Suspension wird bei Einsatz des PVB-Typs mit hohem Polyvinylacetatgehalt anstelle von B45H oder Fischöl erreicht.

**Herstellung von Grünfolien**

Die so erhaltenen Suspensionen (Gießschlicker) wurden entgast und auf einer 4 m langen Foliengießanlage mit stehendem Doppelkammergießschuh nach dem Doctor-Blade-Verfahren vergossen. Als Gießunterlage kam eine siliconisierte PET-Folie (Dicke 100 $\mu$m) zum Einsatz. Die Folie wurde nach dem Gießen 48 h an Luft getrocknet (Temperatur = 22°C; Luftfeuchte = 65%) und anschließend abgezogen.

Die erhaltenen Folien ergaben eine Dicke von 200 $\mu$m und zeigten in der optischen Bewertung keinerlei Risse, Blasen oder Fehlstellen.

Die Dichte der gegossenen Al$_2$O$_3$-Folien wurde mittels Auftriebsmessung nach Archimedes bestimmt. Die Grünfoliendichten lagen alle in dem für das Foliengießen üblichen Bereich zwischen 60 und 70 Prozent der theoretischen Dichte.

Aus den jeweiligen Grünfolien wurden geeignete Zugproben in Form von sog. "Hundeknochen" gestanzt. Pro Folientyp wurden 10 Zugproben quer und 10 Proben parallel zur Gießrichtung gestanzt, um ein mögliches anisotropes Verhalten des Grünkörpers bestimmen zu können. Als Prüfmaschine kam eine Faserzugprüfanlage (Fafegraph ME, Fa. Textechno) zum Einsatz. Der maximale Messbereich lag bei 100 N, die Belastungsgeschwindigkeit betrug 10 mm/min. Gemessen wurde bei Raumtemperatur an Umgebungsluft.

Es wurden mit Grünfolien nach dem Stand der Technik vergleichbare Werte ermittelt, die auf keine signifikanten Eigenschaftsunterschiede der Erfindungsgemäß hergestellten Folien zu denen nach dem Stand der Technik hindeuten.

Der neue PVB-Typ ist damit als Dispergator und gleichzeitiges Bindemittel zur Herstellung keramischer Grünfolien geeignet. Vorteilhaft wird bei der Herstellung der Suspensionen eine verbesserte Dispergierwirkung und ein höherer Feststoffanteil erreicht und dementsprechend erhebliche anwendungstechnische Vorteile erzielt.

**Patentansprüche**

1. Verwendung von acetalisierten Polyvinylalkoholen zur Herstellung von keramischen Grünfolien oder keramischen Formkörpern **dadurch gekennzeichnet, dass** der acetalisierte Polyvinylalkohol einen Polyvinylacetatgehalt von 8 bis 50 Ges.%, einen Polymerisationsgrad $\overline{P}_w$ von 100 bis 1200 und ausschließlich Vinylalkoholeinheiten ohne 1-Alkylvinyl-alkoholeinheiten aufweist.

2. Verwendung von acetalisierten Polyvinylalkoholen, **dadurch gekennzeichnet, dass** der acetalisierte Polyvinylalkohol einen Polyvinylalkoholgehalt von 10 bis 35 Gew.% aufweist.

3. Verwendung von acetalisierten Polyvinylalkoholen nach Anspruch 1 oder 2, **dadurch gekennzeichnet, dass** der acetalisierte Polyvinylalkohol einen Polymerisationsgrad von 100 bis 1000 aufweist.

4. Verwendung von acetalisierten Polyvinylalkoholen nach Anspruch 1 oder 2, **dadurch gekennzeichnet, dass** der acetalisierte Polyvinylalkohol eine nach DIN 53015 bestimmte Viskosität von 2 bis 500 mPas aufweist.

5. Verwendung von acetalisierten Polyvinylalkoholen nach Anspruch 1 bis 4, **dadurch gekennzeichnet, dass** zur Acetalisierung des Polyvinylalkohols ein oder mehrere Aldehyde der Gruppe Formaldehyd, Acetaldehyd, Propanal, Butanal, Isobutanal, Pentanal, Hexanal, Heptanal, Octanal, Nonanal, Isononanal oder Decanal eingesetzt werden.

6. Verwendung von acetalisierten Polyvinylalkoholen nach Anspruch 1 bis 5, **dadurch gekennzeichnet, dass** als acetalisierter Polyvinylalkohol Polyvinylbutyral eingesetzt wird.

7. Verfahren zur Herstellung von keramischen Grünfolien oder keramischen Formkörpern durch Vergießen und Trocknen einer Suspension enthaltend anorganische Pigmente, organische Lösungsmittel, Bindemittel, Weichmacher und Dispergiermittel, **dadurch gekennzeichnet, dass** als Dispergiermittel ein acetalisierter Polyvinylalkohol mit einem Polyvinylacetatgehalt von 8 bis 50 Gew.%, einem Polymerisationsgrad $\overline{P}_w$ von 100 bis 1200 verwendet wird, der ausschließlich Vinylalkoholeinheiten ohne 1-Alkylvinyl-alkoholeinheiten aufweist.

8. Verfahren zur Herstellung von keramischen Grünfolien- oder -formkörpern nach Anspruch 7, **dadurch gekennzeichnet, dass** die Suspension 0,1 bis 10 Gew. % des acetalisierten Polyvinylalkohols enthält.

**Claims**

1. Use of acetalised polyvinyl alcohols for the production of ceramic green films or ceramic moulded bodies, **characterised in that** the acetalised polyvinyl alcohol has a polyvinyl acetate content of 8 to 50 % by weight, a degree of polymerisation $\overline{P}_w$ of 100 to 1200, and comprises exclusively vinyl alcohol units without 1-alkylvinyl alcohol units.

2. Use of acetalised polyvinyl alcohols, **characterised in that** the acetalised polyvinyl alcohol has a polyvinyl alcohol content of 10 to 35 % by weight.

3. The use of acetalised polyvinyl alcohols according to Claim 1 or 2, **characterised in that** the acetalised polyvinyl alcohol has a degree of polymerisation of 100 to 1000.

4. The use of acetalised polyvinyl alcohols according to Claim 1 or 2, **characterised in that** the acetalised polyvinyl alcohol has a viscosity, determined in accordance with DIN 53015, of 2 to 500 mPas.

5. The use of acetalised polyvinyl alcohols according to Claims 1 to 4, **characterised in that** one or more aldehydes of the group consisting of formaldehyde, acetaldehyde, propanal, butanal, isobutanal, pentanal, hexanal, heptanal, octanal, nonanal, isononanal or decanal is/are used for acetalisation of the polyvinyl alcohol.

6. The use of acetalised polyvinyl alcohols according to Claims 1 to 5, **characterised in that** polyvinyl butyral is used as acetalised polyvinyl alcohol.

7. A method for producing ceramic green films or ceramic moulded bodies by casting and drying a suspension containing inorganic pigments, organic solvents, binders, plasticisers and dispersing agents, **characterised in that** an acetalised polyvinyl alcohol having a polyvinyl acetate content of 8 to 50 % by weight and a degree of polymerisation $\overline{P}_w$ w of 100 to 1200 is used as a dispersing agent and comprises exclusively vinyl alcohol units without 1-alkylvinyl alcohol units.

8. The method for producing ceramic green film bodies or moulded bodies according to Claim 7, **characterised in that** the suspension contains 0.1 to 10 % by weight of the acetalised polyvinyl alcohol.

**Revendications**

1. Utilisation d'alcools polyvinyliques acétalisés pour fabriquer des feuilles céramiques crues ou des corps moulés céramiques, **caractérisée en ce que** ledit alcool polyvinylique acétalisé présente une teneur en acétate de polyvinyle comprise entre 8 et 50 % en poids, un degré de polymérisation $\overline{P}_w$ compris entre 100 et 1200 et exclusivement des unités d'alcool vinylique dépourvues d'unités d'alcool 1-alkylvinylique.

2. Utilisation d'alcools polyvinyliques acétalisés, **caractérisée en ce que** ledit alcool polyvinylique acétalisé présente une teneur en alcool polyvinylique comprise entre 10 et 35 % en poids.

3. Utilisation d'alcools polyvinyliques acétalisés selon les revendications 1 ou 2, **caractérisée en ce que** ledit alcool polyvinylique acétalisé présente un degré de polymérisation compris entre 100 et 1000.

4. Utilisation d'alcools polyvinyliques acétalisés selon les revendications 1 ou 2, **caractérisée en ce que** ledit alcool polyvinylique acétalisé présente une viscosité, déterminée selon DIN 53015, comprise entre 2 et 500 mPas.

5. Utilisation d'alcools polyvinyliques acétalisés selon les revendications 1 à 4, **caractérisée en ce qu'**un ou plusieurs aldéhydes du groupe de formaldéhyde, acétaldéhyde, propanal, butanal, isobutanal, pentanal, hexanal, heptanal, octanal, nonanal, isononanal ou décanal sont mis en oeuvre pour acétaliser ledit alcool polyvinylique.

6. Utilisation d'alcools polyvinyliques acétalisés selon les revendications 1 à 5, **caractérisée en ce que** l'on met en oeuvre, en tant qu'alcool polyvinylique acétalisé, du polyvinyle de butyral.

7. Procédé de fabrication de feuilles céramiques crues ou de corps moulés céramiques consistant à couler et sécher une suspension contenant des pigments inorganiques, des solvants organiques, des liants, des plastifiants et des agents dispersants, **caractérisé en ce que** l'on utilise, en tant qu'agent dispersant, un alcool polyvinylique acétalisé dont la teneur en acétate de polyvinyle est comprise entre 8 et 50 % en poids et dont le degré de polymérisation $\overline{P}_w$ est compris entre 100 et 1200 et qui présente exclusivement des unités d'alcool vinylique dépourvues d'unités d'alcool 1-alkylvinylique.

8. Procédé de fabrication de feuilles ou de corps moulés céramiques crus selon la revendication 7, **caractérisé en ce que** ladite suspension contient 0,1 à 10 % en poids dudit alcool polyvinylique acétalisé.

Fig. 1

Fig. 2

Fig. 3

Fig. 4

Fig. 5

Fig.6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4003198 A1
- DE 3724108 A1
- DE 19816722 A1
- DE 1545135 A1
- US 6211289 B